# EUROPEAN PATENT SPECIFICATION

(11) **EP 1 150 214 B1**
(45) Date of publication and mention of the grant of the patent: **08.09.2004**
(21) Application number: 01109954.6
(22) Date of filing: 24.04.2001
(51) Int. Cl.: G06F 13/40

(54) **Endian conversion of plural-byte units without delay**
Verzögerungsfreie Endian-Umwandlung von Byte-Dateneinheiten
Transformation d'extrémités (endian) sans délai d'unités de données organisées par octets

(30) Priority: 26.04.2000 JP 2000126101
(43) Date of publication of application: 31.10.2001
(73) Proprietor: NEC Electronics Corporation, Kawasaki, Kanagawa 211-8668 (JP)
(72) Inventor: Suzuki, Hideo, Minato-ku, Tokyo (JP); Kariya, Hiroshi, Minato-ku, Tokyo (JP)
(74) Representative: Glawe. Delfs. Moll

(56) References cited:
- EP-A- 0 695 998
- EP-A- 0 764 899
- US-A- 5 867 690
- US-A- 5 907 865
- US-A- 5 961 640

## Description

### Background of the Invention

### 1. Field of the Invention

The present invention relates to an endian conversion apparatus for executing a matching operation between a big endian and a little endian.

### 2. Description of the Related Art

An endian is cited as one specification of a computer. A data structure in which the smallest digit bit is placed at a least significant address is referred to as a little endian (LE). A data structure in which the largest digit bit is set at a least significant address is referred to as a big endian (BE). The matching operation between the endians is required when data is sent and received between a computer based on a little endian specification (a hardware and a system such as a processor and the like) and a computer based on a big endian specification (a hardware and a system such as a processor and the like).

A process with regard to the matching operation between the endians is executed, for example, when data is sent and received between OS such as Windows or the like (the side of the little endian) and OS such as vxWorks, pSOS, proprietary or the like (the side of the big endian) used under a network environment such as ADSL or the like.

In US 5,907,865 a method and an apparatus for reading big-endian and little-endian data are disclosed. Controls signs distinguishing between big-endian and little-endian data are supplied to a multiplexer controller providing control signals to a multiplexer switching the data from the big-endian or the little endian into a specific internal format. EP 0 764 899 treats a method for converting data formats including arrays of data, little-endian data and big-endian data.

A technique with regard to the matching operation between the endians is disclosed in, for example, Japanese Laid Open Patent Application (JP-A-Heisei, 3-232189) and Japanese Laid Open Patent Application (JP-A-Heisei, 6-124201).

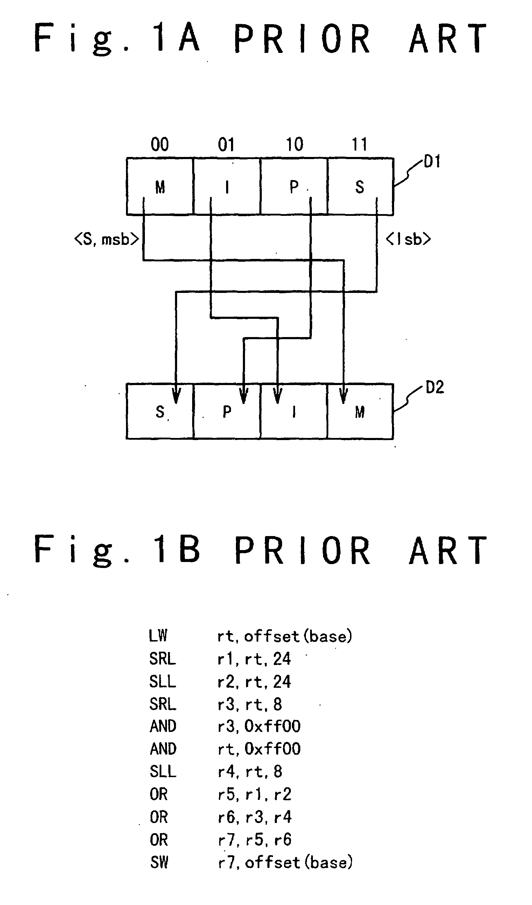

Figs. 1A and 1B are first explanation views with regard to the conventional endian conversion. Fig. 1A shows a course in which a data D1 of a big endian is converted into a data D2 of a little endian. Fig. 1B shows an example of an assembler program for executing the course shown in Fig. 1A. The data D1 is constituted by a four-byte data, and a data "M" on the side of the most significant digit bit is stored in a least significant address "00". Similarly, a data "I" is stored in an address "01", a data "P" is stored in an address "10", and a data "S" is stored in an address "11".

When the data D2 corresponding to the data D1 is converted into the little endian, the data "S" on the side of the least significant bit is stored in the lower address "00". Similarly, the data "P" is stored in an address "01", the data "I" is stored in an address "10", and the data "M" is stored in an address "11".

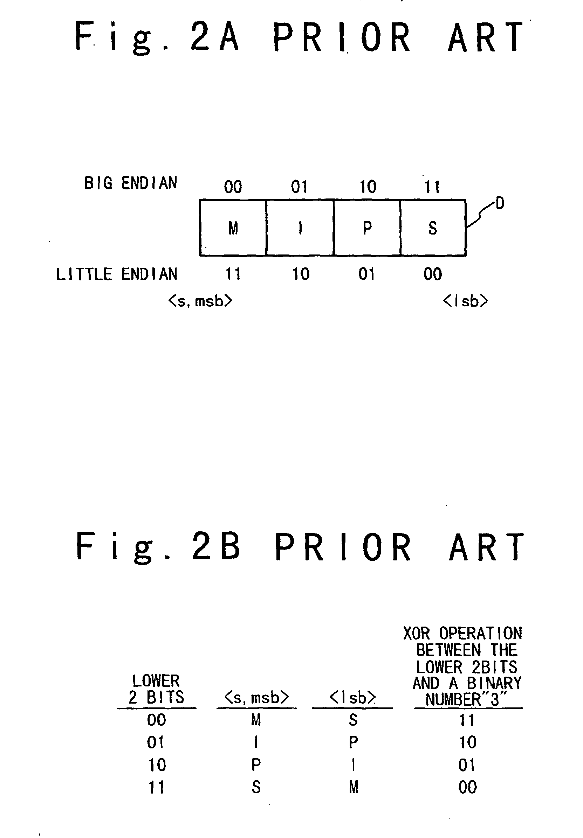

In the invention disclosed in Japanese Laid Open Patent Application (JP-A-Heisei, 6-124201), the processes shown in Figs. 1A, 1B are executed by using the lower two bits of an address bit. Figs. 2A and 2B are explanation views of a process in which the lower two bits are used. When a data D shown in Fig. 2A is represented as the big endian, the data "M" is stored in an address "00". On the other hand, when the data D is represented as the little endian, the data "S" is stored in an address "00". As shown in Fig. 2B, as for the address corresponding to the endian representation, when an exclusive-OR (XOR) operation is carried out between the lower two bits and a binary number "3", an address is obtained correspondingly to the little endian representation.

In the conventional endian conversion, in particular, there is no problem when data is recognized at a one-byte unit. However, there is a problem when data is recognized at a plural-byte unit. That is, for example, in a data D shown in Figs. 2A and 2B, when it is recognized as a data "M, I" and a data "P, S" in the big endian representation, an order of data must be maintained even in the little endian representation. However, it is recognized as a data "I, M" and a data "S P", in the little endian representation.

In order to solve such a problem, a process may be considered for shifting the data at a two-byte unit prior to the execution of the endian conversion. That is, the content of the data D in the big endian representation is converted from a data "M, I, P, S" to a data "I, M, S, P". After that, in the data "I, M, S, P" in the big endian representation, a data "P, S, M, I" in the little endian representation is generated by the endian conversion. When the data "P, S, M, I" in the little endian representation is read at the two-byte unit, the data "P, S" and the data "M, I" are recognized.

The above-mentioned shift of the data at the two-byte unit prior to the execution of the endian conversion can be executed by using a software or a logical circuit. If the shift is executed by using the software, a delay in the endian process is induced in conjunction with the execution.

### Summary of the Invention

The present invention is accomplished in view of the above mentioned problems. Therefore, an object of the present invention is to provide an endian conversion apparatus in which a trouble is never induced in a recognition at a plural-byte unit without any delay in an endian process.

This and other objects of the present invention are achieved by an endian conversion apparatus according to claim 1. The dependent claims treat advantageous further developments of the present invention.

In order to achieve an aspect of the present invention, an endian conversion apparatus, includes: a first switch inputting an input byte data, a data size signal, an endian switch signal and a byte enable data to output an output byte data having a second endian representation, and wherein the input byte data includes a plurality of byte data having a first endian representation, and wherein the data size signal indicates the number of bytes to be recognized as a unit, and wherein the endian switch signal indicates an execution of an endian conversion, and wherein the byte enable data indicates a number of byte positions to be recognized as the unit, the first endian representation being performed on the byte enable data, and wherein the first switch outputs the output byte data having, as one unit, the number of bytes indicated by the data size signal when the endian switch signal indicates the execution, and wherein an array of the positions of the bytes indicated by the byte enable data is maintained in the output byte data.

In this case, the endian conversion apparatus further includes: a second switch inputting the data size signal, the endian switch signal, and the byte enable data to output an output byte enable data having a second endian representation, and wherein the second switch outputs the output byte enable data having the number of bits corresponding to the number of bytes indicated by the data size signal when the endian switch signal indicates the execution, and wherein a bit array corresponding to the byte position indicated by the byte enable data is maintained in the output byte enable data.

Also in this case, when the first endian representation is a big endian representation, the second endian representation is a little endian representation, and wherein when the first endian representation is the little endian representation, the second endian representation is the big endian representation.

Further in this case, the input byte data is a four-byte data and the number of bytes indicated by the data size signal is one of one byte, two bytes, three bytes and four bytes.

In this case, when the number of bytes is one byte, the byte position to be recognized corresponds to one of four byte positions of the input byte data.

Also in this case, when the number of bytes is two bytes, the byte position to be recognized corresponds to lower two bytes or higher two bytes of four byte positions of the input byte data.

Further in this case, when the number of bytes is three bytes, the byte position to be recognized corresponds to lower three bytes or higher three bytes of four byte positions of the input byte data.

In this case, when the number of bytes is four bytes, the byte position to be recognized corresponds to all bytes of four byte positions of the input byte data.

In order to achieve still another aspect of the present invention, an ADSL modem has an endian conversion apparatus according to the present invention.

In order to achieve yet still another aspect of the present invention, a line matching device has an endian conversion apparatus according to the present invention.

### Brief Description of the Drawings

Figs. 1A and 1B are first explanation views with regard to a conventional endian conversion;
Figs. 2A and 2B are views explaining a process in which lower two bits are used;
Fig. 3 is a circuit diagram showing an endian conversion apparatus according to the present invention;
Fig. 4 is an operation table according to an endian conversion apparatus of the present invention;
Fig. 5 is a conceptual view showing a two-byte transfer according to the present invention;
Fig. 6 is a conceptual view showing a four-byte transfer according to the present invention;
Figs. 7A and 7B are conceptual views showing a three-byte transfer according to the present invention;
Fig. 8 is a conceptual view showing a one-byte transfer according to the present invention;
Figs. 9A and 9B are views showing an array relation of a byte data according to the present invention;
Fig. 10 is a conceptual view of an ADSL system;
Fig. 11 is a block diagram showing a circuit according to an endian conversion apparatus of the present invention; and
Fig. 12 is a conceptual view of a system controller 55 according to the present invention.

### Description of the Preferred Embodiment

An embodiment of the present invention will be described below in detail with reference to the attached drawings.

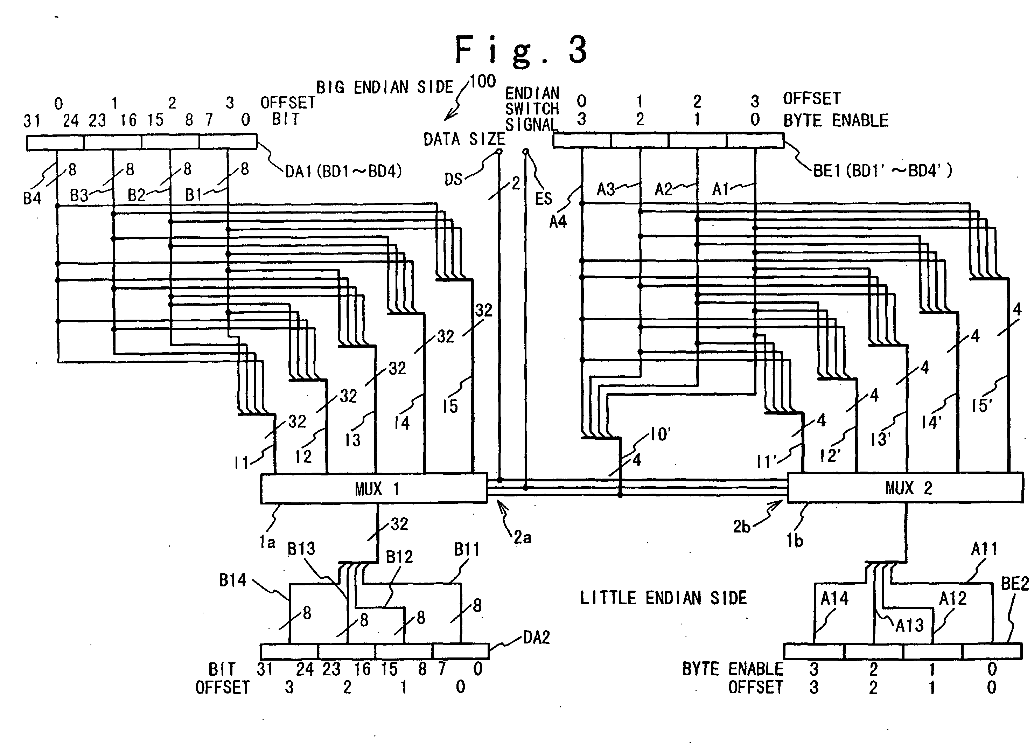

Fig. 3 is a circuit diagram showing an endian conversion apparatus according to the present invention. An endian conversion apparatus 100 shown in Fig. 3 is constituted, for example, by using a gate circuit or a software. The endian conversion apparatus 100 is provided with a first switch (MUX1) 1a and a second switch (MUX2) 1b. The first switch 1a has first to fifth data buses I1 to I5. The second switch 1b has first to fifth signal buses I1' to I5'.

An input byte data DA1 of four bytes for describing a big endian representation (a first endian representation) is inputted to the first to fifth data buses I1 to I5. A first byte data (bits 0 to 7 : BD1), a second byte data (bits 8 to 15 : BD2), a third byte data (bits 16 to 23 : BD3) and a fourth byte data (bits 24 to 31 : BD4) are placed in the input byte data DA1, in an order starting from a side of an upper address. The first byte data is sent to a first input byte line B1. A second byte data is sent to a second input byte line B2. A third byte data is sent to a third input byte line B3. And, a fourth byte data is sent to a fourth input byte line B4. Each of the first to fourth input byte lines B1 to B4 is an 8-bit signal line, as can be seen from the numerals noted in a lateral portion of a signal line.

The fourth byte data, the third byte data, the second byte data and the first byte data of the input byte data DA1 are inputted to the first data bus I1, in an order starting from a side of an upper address. The third byte data, the fourth byte data, the first byte data and the second byte data of the input byte data DA1 are inputted to the second data bus 12, in an order starting from a side of an upper address. The second byte data, the third byte data, the fourth byte data and the first byte data of the input byte data DA1 are inputted to the third data bus I3, in an order starting from a side of an upper address. The fourth byte data, the first byte data, the second byte data and the third byte data of the input byte data DA1 are inputted to the fourth data bus 14, in an order starting from a side of an upper address. And, the first byte data, the second byte data, the third byte data and the fourth byte data of the input byte data DA1 are inputted to the fourth data bus I5, in an order starting from a side of an upper address. Each of the first to fifth data buses I1 to I5 is a 32-bit signal line, as can be seen from the numerals noted in the lateral portion of the signal line.

An input byte enable data BE1 for describing a big endian representation is inputted to the first to fifth signal buses I1' to I5'. A first bit data (Bit 0 : BD1'), a second bit data (Bit 2 : BD2'), a third bit data (Bit 3 : BD3') and a fourth bit data (Bit 4 : BD4') are placed in the input byte enable data BE1, in an order starting from a side of an upper address. The first bit data is sent to a first input bit line A1. The second bit data is sent to a second input bit line A2. The third bit data is sent to a third input bit line A3. And, the fourth bit data is sent to a fourth input bit line A4. Each of the first to fourth input bit lines A1 to A4 is a one-bit signal line.

The fourth bit data, the third bit data, the second bit data and the first bit data of the input byte enable data BE1 are inputted to the first signal bus I1', in an order starting from a side of an upper address. The third bit data, the fourth bit data, the first bit data and the second bit data of the input byte enable data BE1 are inputted to the second signal bus I2', in an order starting from a side of an upper address. The second bit data, the third bit data, the fourth bit data and the first bit data of the input byte enable data BE1 are inputted to the third signal bus I3', in an order starting from a side of an upper address. The fourth bit data, the first bit data, the second bit data and the third bit data of the input byte enable data BE1 are inputted to the fourth signal bus I4', in an order starting from a side of an upper address. And, the first bit data, the second bit data, the third bit data and the fourth bit data of the input byte enable data BE1 are inputted to the fifth signal bus I5', in an order starting from a side of an upper address. Each of the first to fifth signal buses I1' to I5' and the signal bus I0' is a four-bit signal line, as can be seen from the numerals noted in the lateral portion of the signal line.

The input byte enable data BE1 is sent to control inputs 2a, 2b of the first and second switches 1a, 1b, in a bit array similar to that of the fifth signal bus I5', through the signal bus I0'. A data size signal DS and an endian switch signal ES are sent to the control inputs 2a, 2b. A signal line to which the data size signal DS is sent is a two-bit signal line, as can be seen from the numerals noted in the lateral portion of the signal line. A signal line to which the endian switch signal ES is sent is a one-bit signal line.

A first output byte data is outputted through a first output byte line B11 from the first switch 1a. Similarly, a second output byte data is outputted through a second output byte line B12. Similarly, a third output byte data is outputted through a third output byte line B13. Similarly, a fourth output byte data is outputted through a fourth output byte line B14. An output byte data DA2 of a little endian representation (a second endian representation) is generated by the first to fourth output byte data. The first output byte data is placed on a side of a lower address of the output byte data DA2. The fourth output byte data is placed on a side of an upper address of the output byte data DA2.

A first output bit data is outputted through a first output bit line A11 from the second switch 1b. Similarly, a second output bit data is outputted through a second output bit line A12. Similarly, a third output bit data is outputted through a third output bit line A13. Similarly, a fourth output bit data is outputted through a fourth output bit line A14. An output byte enable data BE2 of a little endian representation is generated by the first to fourth output bit data. The first output bit data is placed on a side of a lower address of the output byte enable data BE2. The fourth output bit data is placed on a side of an upper address of the output byte enable data BE2. Each of the first to fourth output bit lines A11 to A14 is a one-bit signal line.

The data size signal DS is the signal indicative of the number of bytes in a unit byte data to be recognized as one unit having a predetermined meaning. The endian switch signal ES is the signal indicating an execution of a change to the little endian from the big endian.

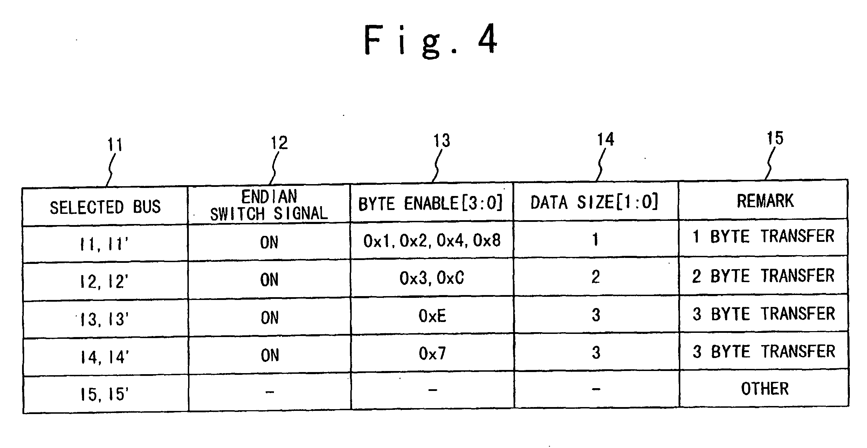

The operation of the endian conversion apparatus 100 having the above-mentioned configuration will be described below with reference to Figs. 4 to 8.

Fig. 4 is an operation table according to the endian conversion apparatus of the present invention. Fig. 4 shows a bus item 11 indicative of the first to fifth data buses I1 to I5 and the first to fifth signal buses I1' to I5' to be selected, a signal item 12 indicative of a content of the endian switch signal ES, an enable item 13 indicative of a content of the input byte enable data BE1, a size item 14 indicative of a content of the data size signal DS, and a remark item 15.

If a unit data represented by the input byte data DA1 is constituted by one byte, namely, if a one-byte transfer is executed, the content of the data size signal DS is set to "1" as shown in the size item 14, and the content of the endian switch signal ES is set to "1:ON" as shown in the signal item 12. Also, the input byte enable data BE1 is set to any of binary numerals "0001:0x1", "0010:0x2", "0100:0x4" and "1000:0x8". In this case, the first switch 1a recognizes the content of the input byte enable data BE1 through the signal bus I0', and selects the first data bus I1. Similarly, the switch 1b selects the first signal bus I1'. This selection causes the fourth byte data BD4 to be outputted to the first output byte line B11. Similarly, the third byte data BD3 is outputted to the second output byte line B12, the second byte data BD2 is outputted to the third output byte line B13, and the first byte data BD1 is outputted to the fourth output byte line B14. The fourth byte data BD4, the third byte data BD3, the second byte data BD2 and the first byte data BD1 are placed in the output byte data DA2, from the lower bit side (lower address side). On the other hand, in the second switch 1b, the fourth bit data BD4' is outputted to the first output bit line A11. Similarly, the third bit data BD3' is outputted to the second output bit line A12, the second bit data BD2' is outputted to the third output bit line A13, and the first bit data BD1' is outputted to the fourth output bit line A14. The fourth bit data BD4', the third bit data BD3', the second bit data BD2' and the first bit data BD1' are placed in the output enable data BE2, from the lower bit side (lower address side).

If the unit data represented by the input byte data DA1 is constituted by two bytes, namely, if a two-byte transfer is executed, the content of the data size signal DS is set to "2", and the content of the endian switch signal ES is set to "1:ON". Also, the input byte enable data BE1 indicates any of binary numerals "0011:0x3" and "1100:0xC". In this case, the first switch 1a recognizes the content of the input byte enable data BE1 through the signal bus I0', and the first switch 1a selects the second data bus I2. Similarly, the switch 1b selects the second signal bus I2'. This selection causes the third byte data BD3 to be outputted to the first output byte line B11. Similarly, the fourth byte data BD4 is outputted to the second output byte line B12, the first byte data BD1 is outputted to the third output byte line B13, and the second byte data BD2 is outputted to the fourth output byte line B14. The third byte data BD3, the fourth byte data BD4, the first byte data BD1 and the second byte data BD2 are placed in the output byte data DA2, from the lower bit side (lower address side). On the other hand, in the second switch 1b, the third bit data BD3' is outputted to the first output bit line A11. Similarly, the fourth bit data BD4' is outputted to the second output bit line A12, the first bit data BD1' is outputted to the third output bit line A13, and the second bit data BD2' is outputted to the fourth output bit line A14. The third bit data BD3', the fourth bit data BD4', the first bit data BD1' and the second bit data BD2' are placed in the output enable data BE2, from the lower bit side (lower address side).

In this case, the output byte data DA2 is recognized as the data having, as one unit, two bytes constituted by a combination of the first byte data BD1 and the second byte data BD2 or a combination of the third byte data BD3 and the fourth byte data BD4.

If the unit data represented by the input byte data DA1 is constituted by three bytes, namely, if a three-byte transfer is executed, the content of the data size signal DS is set to "3", and the content of the endian switch signal ES is set to "1:ON". Also, the input byte enable data BE1 indicates any of binary numerals "1110:0xE" and "0111:0x7".

If the input byte enable data BE1 represents "0xE", the first switch 1a recognizes the content of the input byte enable data BE1 through the signal bus I0', and selects the third data bus I3. Similarly, the switch 1b selects the third signal bus I3'. This selection causes the second byte data BD2 to be outputted to the first output byte line B11. Similarly, the third byte data BD3 is outputted to the second output byte line B12, the fourth byte data BD4 is outputted to the third output byte line B13, and the first byte data BD1 is outputted to the fourth output byte line B14. The second byte data BD2, the third byte data BD3, the fourth byte data BD4 and the first byte data BD1 are placed in the output byte data DA2, from the lower bit side (lower address side). On the other hand, in the second switch 1b, the second bit data BD2' is outputted to the first output bit line A11. Similarly, the third bit data BD3' is outputted to the second output bit line A12, the fourth bit data BD4' is outputted to the third output bit line A13, and the first bit data BD1' is outputted to the fourth output bit line A14. The second bit data BD2', the third bit data BD3', the fourth bit data BD4' and the first bit data BD1' are placed in the output enable data BE2, from the lower bit side (lower address side).

In this case, the output byte data DA2 is recognized as the data having, as one unit, three bytes constituted by a combination of the second byte data BD2 to the fourth byte data BD4.

If the input byte enable data BE1 represents "0x7", the first switch 1a recognizes the content of the input byte enable data BE1 through the signal bus I0', and selects the fourth data bus I4. Similarly, the switch 1b selects the fourth signal bus I4'. This selection causes the fourth byte data BD4 to be outputted to the first output byte line B11. Similarly, the first byte data BD1 is outputted to the second output byte line B12, the second byte data BD2 is outputted to the third output byte line B13, and the third byte data BD3 is outputted to the fourth output byte line B14. The fourth byte data BD4, the first byte data BD1, the second byte data BD2 and the third byte data BD3 are placed in the output byte data DA2, from the lower bit side (lower address side). On the other hand, in the second switch 1b, the fourth bit data BD4' is outputted to the first output bit line All. Similarly, the first bit data BD1' is outputted to the second output bit line A12, the second bit data BD2' is outputted to the third output bit line A13, and the third bit data BD3' is outputted to the fourth output bit line A14. The fourth bit data BD4', the first bit data BD1', the second bit data BD2' and the third bit data BD3' are placed in the output enable data BE2, from the lower bit side (lower address side).

In this case, the output byte data DA2 is recognized as the data having, as one unit, three bytes constituted by a combination of the first byte data BD1 to the third byte data BD3.

If the endian conversion apparatus 100 does not execute the endian conversion, namely, if a four-byte transfer is executed, the content of the data size signal DS is set at an ineffective state, for example, it is set to "0". Then, the content of the endian switch signal ES is set at the ineffective state, for example, it is set to "0:OFF". Also, the content of the input byte enable data BE1 is set at the ineffective state, for example, it is set to a binary numeral "1111:0xF". In this case, the first switch 1a selects the fifth data bus I5. Similarly, the switch 1b selects the fifth signal bus I5'. This selection causes the first byte data BD1 to be outputted to the first output byte line B11. Similarly, the second byte data BD2 is outputted to the second output byte line B12, the third byte data BD3 is outputted to the third output byte line B13, and the fourth byte data BD4 is outputted to the fourth output byte line B14. The first byte data BD1, the second byte data BD2, the third byte data BD3 and the fourth byte data BD4 are placed in the output byte data DA2, from the lower bit side (lower address side). On the other hand, in the second switch 1b, the first bit data BD1' is outputted to the first output bit line A11. Similarly, the second bit data BD2' is outputted to the second output bit line A12, the third bit data BD3' is outputted to the third output bit line A13, and the fourth bit data BD4' is outputted to the fourth output bit line A14. The first bit data BD1', the second bit data BD2', the third bit data BD3' and the fourth bit data BD4' are placed in the output enable data BE2, from the lower bit side (lower address side).

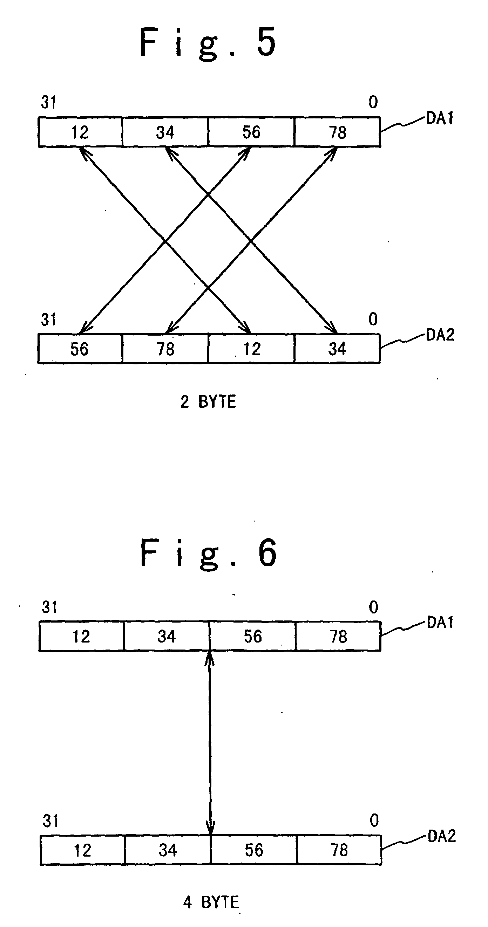

Fig. 5 is a conceptual view showing the two-byte transfer according to the present invention. In an input byte data DA1 shown in Fig. 5, a first byte data represents a content "78". Similarly, a second byte data represents a content "56", a third byte data represents a content "34", and a fourth byte data represents a content "12". The endian conversion apparatus 100 according to the present invention, when executing the two-byte conversion, generates an output byte data DA2, in accordance with this input byte data DA1. As shown in Fig. 5, the contents "34", "12", "78" and "56" are placed in the output byte data DA2, from the lower address side.

Fig. 6 is a conceptual view showing the four-byte transfer according to the present invention. An input byte data DA1 shown in Fig. 6 is similar to that shown in Fig. 5. The endian conversion apparatus 100 according to the present invention, when executing the four-byte conversion, generates an output byte data DA2, in accordance with this input byte data DA1. As shown in Fig. 6, contents "78", "56", "34" and "12" are placed in the output byte data DA2, from the lower bit side.

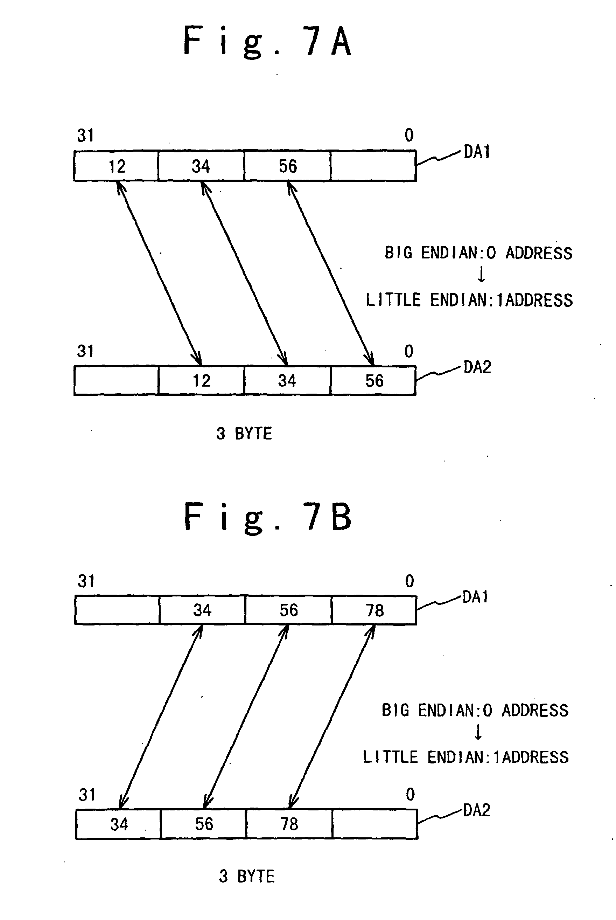

Figs. 7A and 7B are conceptual views showing the three-byte transfer according to the present invention. An input byte data DA1 shown in Figs. 7A, 7B is similar to that shown in Fig. 5. Also, Fig. 7A shows a conversion example when a byte enable data BE represents "0xE". The endian conversion apparatus 100 according to the present invention, when executing the three-byte conversion, generates an output byte data DA2, in accordance with this input byte data DA1. As shown in Fig. 7A, contents "56", "34", "12" and "Indeterminate" are placed in the output byte data DA2, from the lower bit side. Moreover, as shown in Fig. 7B, contents "Indeterminate", "78", "56" and "34" are placed in the output byte data DA2, from the lower bit side.

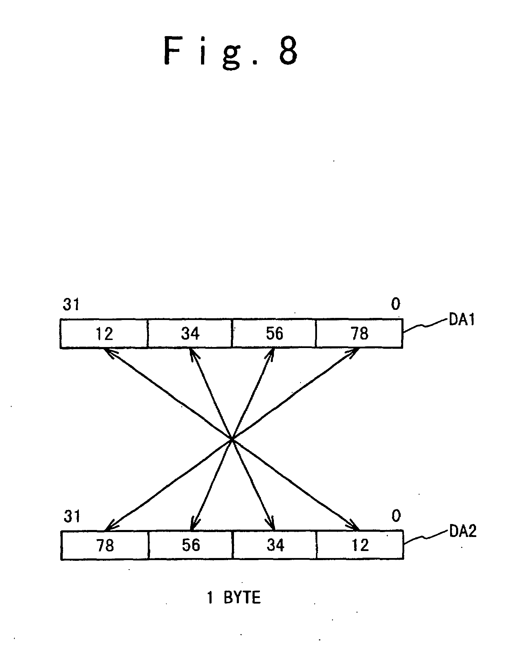

Fig. 8 is a conceptual view showing the one-byte transfer according to the present invention. An input byte data DA1 shown in Fig. 8 is similar to that shown in Fig. 5. The endian conversion apparatus 100 according to the present invention, when executing the one-byte conversion, generates an output byte data DA2, in accordance with this input byte data DA1. As shown in Fig. 8, contents "12", "34", "56" and "78" are placed in the output byte data DA2, from the lower bit side.

As described with reference to Figs. 4 to 8, the endian conversion apparatus 100 according to the present invention changes the arrangement of the byte data for each byte number of one unit.

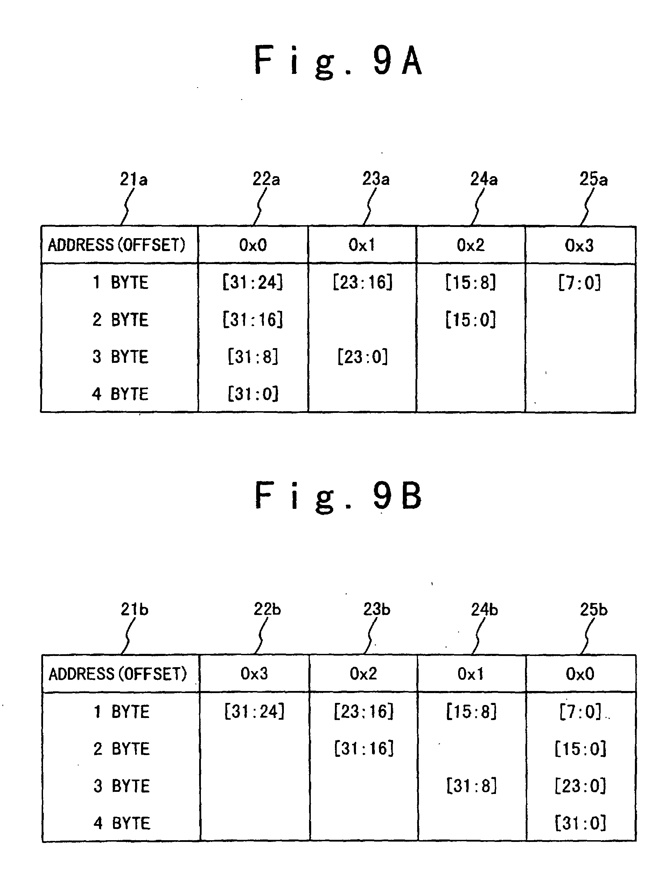

Figs. 9A and 9B are views showing an array relation of a byte data according to the present invention. Fig. 9A shows an array of a byte data represented on the basis of the big endian. Fig. 9B shows an array of a byte data represented on the basis of the little endian.

In Fig. 9A, if the one-byte transfer is executed, a one-byte data represented by 24 to 31 bits is placed in an address "0x0" of an input byte data DA1. Similarly, a one-byte data represented by 16 to 23 bits is placed in an address "0x1", a one-byte data represented by 8 to 15 bits is placed in an address "0x2", and a one-byte data represented by 0 to 7 bits is placed in an address "0x3".

If the two-byte transfer is executed, a two-byte data represented by 16 to 31 bits is placed in the address "0x0", and a two-byte data represented by 0 to 15 bits is placed in the address "0x2".

If the three-byte transfer is executed, a three-byte data represented by 8 to 31 bits is placed in the address "0x0", or a three-byte data represented by 0 to 23 bits is placed in the address "0x1".

If the four-byte transfer is executed, a four-byte data represented by 0 to 31 bits is placed in the address "0x0".

In Fig. 9B, if the one-byte transfer is executed, a one-byte data represented by 24 to 31 bits is placed in an address "0x3" of an output byte data DA2. Similarly, a one-byte data represented by 16 to 23 bits is placed in an address "0x2", a one-byte data represented by 8 to 15 bits is placed in an address "0x1", and a one-byte data represented by 0 to 7 bits is placed in an address "0x0".

If the two-byte transfer is executed, a two-byte data represented by 16 to 31 bits is placed in the address "0x2", and a two-byte data represented by 0 to 15 bits is placed in the address "0x0".

If the three-byte transfer is executed, a three-byte data represented by 8 to 31 bits is placed in the address "0x1", or a three-byte data represented by 0 to 23 bits is placed in the address "0x0".

If the four-byte transfer is executed, a four-byte data represented by 0 to 31 bits is placed in the address "0x0".

The endian conversion apparatus 100 according to the present invention can be applied to an ADSL (Asymmetric Digital Subscriber Line) system.

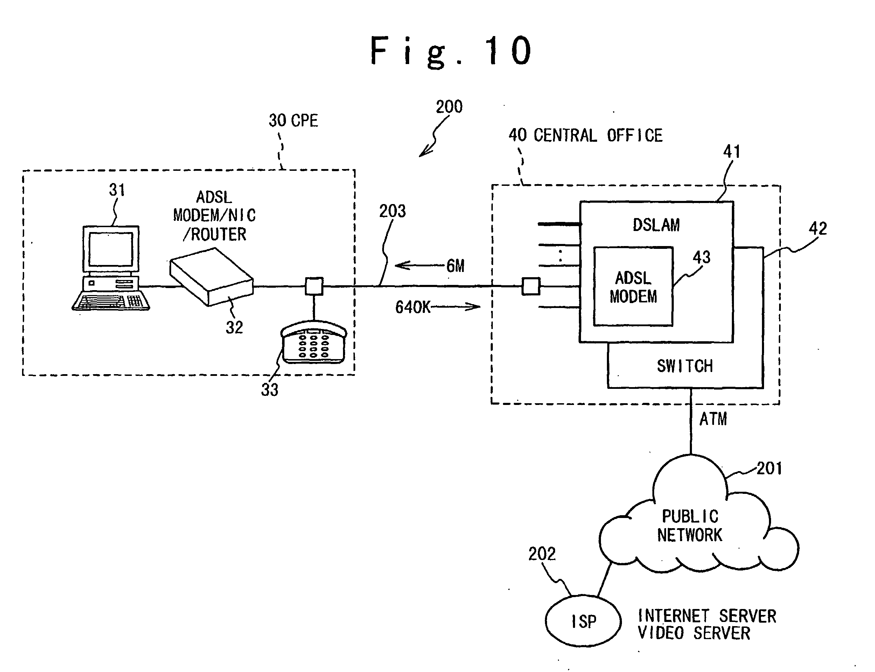

Fig. 10 shows a conceptual view of the ADSL system. An ADSL system 200 shown in Fig. 10 is provided with a public network 201, an Internet service provider (ISP) 202, a client (CPE) 30 coupled through a line 203, and a host (Central Office) 40. The client 30 has a terminal 31, a line matching device 32 and a telephone 33. The host 40 has a DSLAM 41 and a switching device 42. The DSLAM 41 has an ADSL modem 43.

The host 40 is connected through an ATM line to the public network 201. In the line 203, a line speed of 640 kbps in an upward direction and 6 Mbps in a downward direction is set. The terminal 31 is, for example, an Internet communication terminal operated by a user. The line matching device 32 is composed of, for example, an ADSL modem, NIC, a router and the like.

The endian conversion apparatus 100 according to the present invention is installed in, for example, the line matching device 32 or the ADSL modem 43.

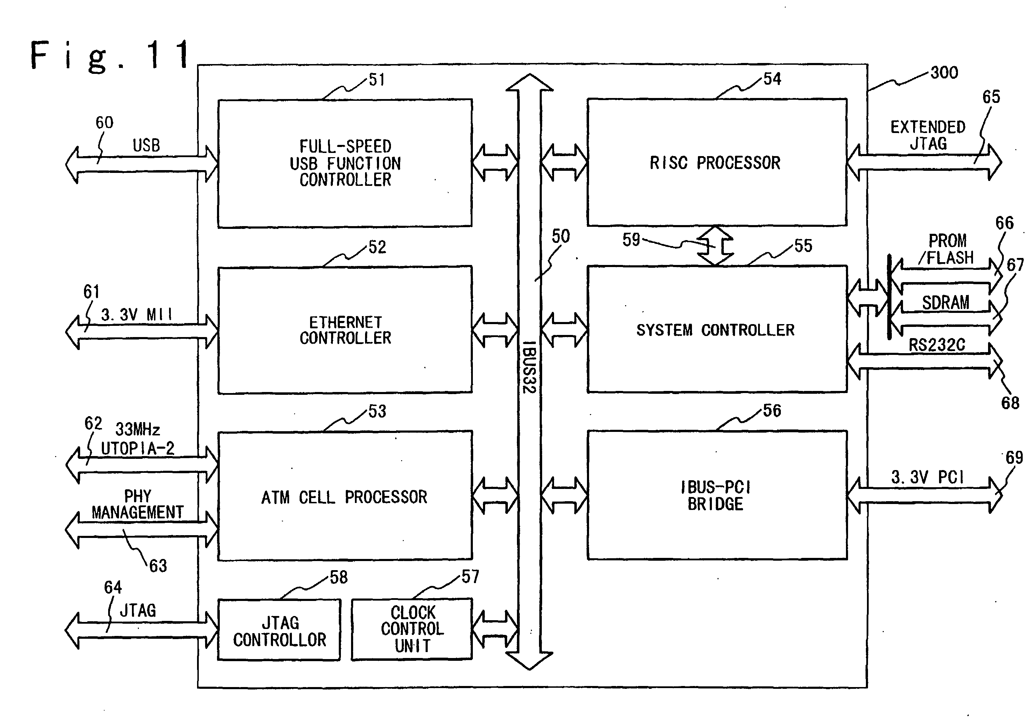

Fig. 11 shows a block diagram of a circuit according to the endian conversion apparatus of the present invention. A circuit 300 shown in Fig. 11 is provided with a USB controller 51 connected through a bus (IBUS) 50, an Ethernet controller 52, an ATM cell processor 53, system controller 55, a bus-PCI bridge 56, a clock control unit 57 and a JTAG controller 58.

A RISC processor 54 is coupled through a sub bus (sysADBus) 59 to the system controller 55.

The USB controller 51 controls a USB interface 60. The Ethernet controller 52 controls an Ethernet interface 61. The ATM cell processor 53 controls an ATM interface 62 (for example, a UTOPIA2 bus) and a physical device 63. The JTAG controller 58 controls a JTAG interface 64. The RISC processor 54 collectively controls the members of the circuit 300 and an extended JTAG interface 65. The system controller 55 controls a PROM or flash ROM interface 66 and an SDRAM interface 67, and an RS232C interface 68. The endian conversion apparatus 100 according to the present invention is installed in this system controller 55. The bus-PCI bridge 56 controls the PCI interface 69.

In the circuit 300 having the above-mentioned configuration, for example, VxWorks, pSOS, proprietary and the like are driven as OS, in the RISC processor 54. In those OSes, data is recognized under the big endian representation. On the other hand, data is recognized under the little endian representation, outside the RISC processor 54. For this reason, the endian conversion is performed on the input/output data to the RISC processor 54, in the endian conversion apparatus 100 of the system controller 55.

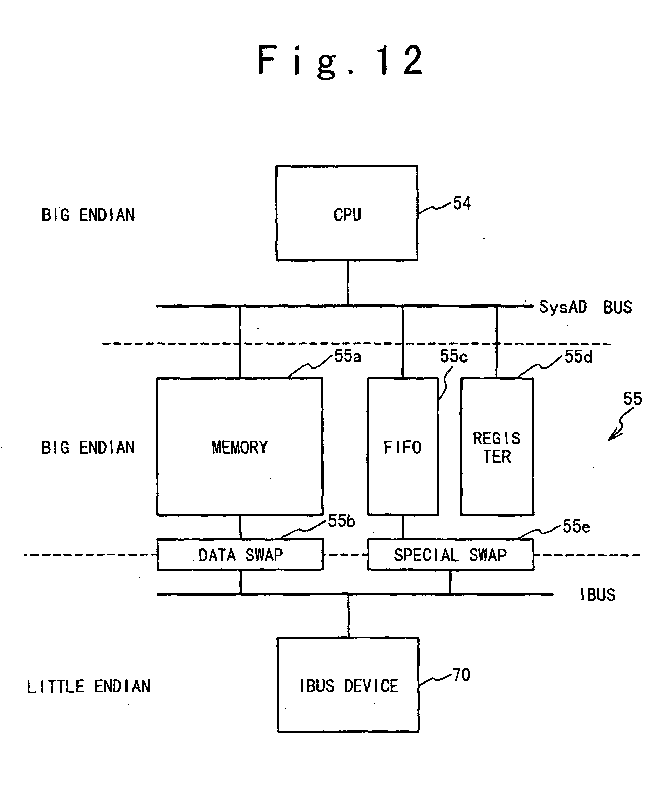

Fig. 12 shows a conceptual view of the system controller 55 according to the present invention. As shown in Fig. 12, the system controller 55 has a memory 55a, a data swap circuit 55b, an FIFO 55c, a register 55d and a special swap circuit 55e.

The memory 55a, the FIFO 55c and the register 55d are connected through the sub bus 59 (Fig. 11) to the RISC processor 54 (Fig. 11). The memory 55a is connected through the data swap circuit 55b to the bus 50 (Fig. 11). The FIFO 55c is connected through the special swap circuit 55e to the bus 50. A device 70 connected to the buses 50, such as the USB controller 51 and the Ethernet controller 52 shown in Fig. 11, and the like, is connected to the bus 50.

The data swap circuit 55b shown in Fig. 12 executes the endian conversion with regard to the one-byte transfer described in Fig. 8, and generates the output byte data DA2 (Fig. 8). At the time of the conversion, the input byte data DA1 (Fig. 8) is stored in the memory 55a.

The special swap circuit 55e shown in Fig. 12 executes the endian conversions with regard to the one-byte transfer, the four-byte transfer and the three-byte transfer described in Figs. 5, 6, 7A, 7B and 8. At the time of the conversion execution, the locations of the input byte data DA1 stored in the memory 55a, the input byte data DA1 transiently stored in the register 55d and the input byte data DA1 transiently stored in the register of CPU 54 are changed at the byte unit, and they are transferred to the FIFO 55c. The special swap circuit 55e refers to the output of the FIFO 55c, and generates the output byte data DA2 of the little endian representation.

As described above, the endian conversion apparatus 100 according to the present invention executes the endian conversion by considering the number of bytes at one unit. Thus, the byte data after the execution of the endian conversion is kept at the state having the meaning at the byte unit. By the way, in order to execute such an endian conversion, in the endian conversion apparatus 100 according to the present invention, it is not necessary to particularly prepare for the step and/or the configuration to individually execute the endian conversion and the location change in which the location at the byte unit is considered. Hence, it is possible to quickly obtain the data after the endian conversion in which the number of bytes at the one unit is considered.

The endian conversion apparatus according to the present invention is not limited to the above-mentioned embodiment. In the embodiment, the four-byte data is described as the example. However, the number of bytes is not limited to the four bytes. Moreover, it is possible to easily establish the configuration considering the number of bytes at one unit which is increased in conjunction with an increase in the number of bytes in the byte data.

Moreover, it is possible to easily correspond to the endian change from the little endian to the big endian.

The present invention can provide the endian conversion apparatus and the endian conversion method in which the trouble is never induced in the recognition at the plural-byte unit without any delay in the endian process.

## Claims

1. An endian conversion apparatus, comprising:
a first switch (1a) inputting an input byte data (DA1), a data size signal (DS), an endian switch signal (ES) and a byte enable data (BE1) to output an output byte data (DA2) having a second endian representation, and
wherein said input byte data (DA1) includes a plurality of byte data units having a first endian representation, and
wherein said data size signal (DS) indicates the number of bytes to be recognized as a unit, and
wherein said endian switch signal (ES) indicates an execution of an endian conversion, and
wherein said byte enable data (BE1) indicates a number of byte positions of the number of bytes to be recognized as said unit, said byte enable data (BE1) having said first endian representation, and
wherein said first switch (1a) outputs said output byte data (DA2) having, as one unit, the number of bytes indicated by said data size signal (DS) when said endian switch signal (ES) indicates said execution, and
wherein an array of said byte positions indicated by said byte enable data (BE1) is maintained in said output byte data (DA2).

2. An endian conversion apparatus according to claim 1, further comprising:
a second switch (1b) inputting said data size signal (DS), said endian switch signal (ES), and said byte enable data (BE1) to output an output byte enable data (BE2) having said second endian representation, and
wherein said second switch (1b) outputs said output byte enable data (BE2) having the number of bits corresponding to the number of bytes indicated by said data size signal (DS) when said endian switch signal (ES) indicates said execution, and
wherein a bit array corresponding to said byte positions indicated by said byte enable data (BE1) is maintained in said output byte enable data (BE2).

3. An endian conversion apparatus according to claim 1 or 2, wherein when said first endian representation is a big endian representation, said second endian representation is a little endian representation, and
wherein when said first endian representation is said little endian representation, said second endian representation is said big endian representation.

4. An endian conversion apparatus according to any one of claims 1 to 3, wherein said input byte data (DA1) is a four-byte data and the number of bytes indicated by said data size signal (DS) is one of one byte, two bytes, three bytes and four bytes.

5. An endian conversion apparatus according to claim 4, herein when the number of bytes is one byte, said byte position to be recognized corresponds to one of four byte positions of said input byte data (DA1).

6. An endian conversion apparatus according to claim 4, wherein when the number of bytes is two bytes, said byte position to be recognized corresponds to lower two bytes or higher two bytes of four byte positions of said input byte data (DA1).

7. An endian conversion apparatus according to claim 4, wherein when the number of bytes is three bytes, said byte position to be recognized corresponds to lower three bytes or higher three bytes of four byte positions of said input byte data (DA1).

8. An endian conversion apparatus according to claim 4, wherein when the number of bytes is four bytes, said byte position to be recognized corresponds to all bytes of four byte positions of said input byte data (DA1).

9. An ADSL modem having an endian conversion apparatus according to claim 1.

10. A line matching device having an endian conversion apparatus according to claim 1.

## Patentansprüche

1. Endian-Umwandlungsvorrichtung mit:
einem ersten Schalter (1a) zur Eingabe von Eingangsbytedaten (DA 1), einem Datengrößensignal (DS), einem Endian-Schaltsignal (ES) und einem Bytefreigabesignal (BE1), um Ausgangsbytedaten (DA2) mit einer zweiten Endian-Darstellung auszugeben,
wobei die Eingangsbytedaten (DA1) eine Anzahl von Bytedateneinheiten mit einer ersten Endian-Darstellung aufweisen,
wobei das Datengrößensignal (DS) die Anzahl der Bytes anzeigt, die als eine Einheit zu erkennen sind,
wobei das Endian-Schaltsignal (ES) eine Durchführung einer Endian-Umwandlung anzeigt,
wobei das Bytefreigabesignal (BE1) eine Anzahl von Bytepositionen der Anzahl der zu erkennenden Byte anzeigt und das Bytefreigabesignal die erste Endian-Darstellung aufweist,
wobei der erste Schalter (1a) die Ausgangsbytedaten (DA2) ausgibt, die als eine Einheit die Anzahl von Bytes aufweisen, die durch das Datengrößensignal (DS) angezeigt werden, wenn das Endian-Schaltsignal (ES) die Durchführung anzeigt,
wobei ein Feld der Bytepositionen, die durch die Bytefreigabedaten (BE1) angezeigt werden, in den Ausgangsbytedaten (DA2) aufrechterhalten wird.

2. Endian-Umwandlungsvorrichtung nach Anspruch 1 mit weiterhin:
einem zweiten Schalter (1b) zur Eingabe des Datengrößensignals (DS), des Endian-Schaltsignals (ES) und der Bytefreigabedaten (BE1), um Ausgangsbytefreigabedaten (BE2) mit einer zweiten Endian-Darstellung auszugeben,
wobei der zweite Schalter (1b) die Ausgangsbytefreigabedaten (BE2) mit der Anzahl von Bytes ausgibt, die der Anzahl von Bytes entsprechen, die durch das Datengrößensignal (DS) angezeigt werden, wenn das Endian-Schaltsignal (ES) die Durchführung anzeigt, und
wobei ein Bitfeld, das den Bytepositionen entspricht, die durch die Bytefreigabedaten (BE1) angezeigt werden, in den Ausgangsbytefreigabedaten (BE2) aufrechterhalten werden.

3. Endian-Umwandlungsvorrichtung nach Anspruch 1 oder 2, wobei wenn die erste Endian-Darstellung eine Groß-Endian-Darstellung ist, die zweite Endian-Darstellung eine Klein-Endian-Darstellung ist und, wenn die erste Endian-Darstellung eine Klein-Endian-Darstellung ist, die zweite Endian-Darstellung eine Groß-Endian-Darstellung ist.

4. Endian-Umwandlungsvorrichtung nach einem der Ansprüche 1 bis 3, wobei die Eingangsbytedaten (DA1) Vier-Byte-Daten sind und die Anzahl der Bytes, die durch das Datengrößensignal (DS) angezeigt wird, ein Byte, zwei Bytes, drei Bytes oder vier Bytes ist.

5. Endian-Umwandlungsvorrichtung nach Anspruch 4, bei der, wenn die Anzahl der Bytes ein Byte beträgt, die zu erkennende Byteposition eine der vier Bytepositionen der Eingangsbytedaten (DA1) entspricht.

6. Endian-Umwandlungsvorrichtung nach Anspruch 4, bei der, wenn die Anzahl der Bytes zwei Bytes beträgt, die zu erkennende Byteposition den niedrigeren zwei Bytes oder den höheren zwei Bytes der vier Bytespositionen der Eingangsbytedaten (DA1) entspricht.

7. Endian-Umwandlungsvorrichtung nach Anspruch 4, bei der, wenn die Anzahl der Bytes drei Bytes beträgt, die zu erkennende Byteposition den niedrigeren drei Bytes oder den höheren drei Bytes der vier Bytepositionen der Eingangsbytedaten (DA1) entspricht.

8. Endian-Umwandlungsvorrichtung nach Anspruch 4, bei der, wenn die Anzahl der Bytes vier Bytes beträgt, die zu erkennende Byteposition allen Bytes der vier Bytepositionen der Eingangsbytedaten (DA1) entspricht.

9. ADSL-Modem mit einer Endian-Umwandlungsvorrichtung nach Anspruch 1.

10. Leitungsanpassungsvorrichtung mit einer Endian-Umwandlungsvorrichtung nach Anspruch 1.

## Revendications

1. Appareil de conversion boutiste, comprenant :
un premier commutateur (1a) entrant une donnée d'octet d'entrée (DA1), un signal de taille de donnée (DS), un signal de commutateur boutiste (ES) et une donnée d'activation d'octet (BE1) pour sortir une donnée d'octet de sortie (DA2) comportant une seconde représentation boutiste, et
dans lequel ladite donnée d'octet d'entrée (DA1) comprend une pluralité d'unités de donnée d'octet comportant une première représentation boutiste, et
dans lequel ledit signal de taille de donnée (DS) indique le nombre d'octets à reconnaître en tant qu'une unité, et
dans lequel ledit signal de commutateur bouliste (ES) indique une exécution de conversion boutiste, et
dans lequel ladite donnée d'activation d'octet (BE1) indique un certain nombre de positions d'octet du nombre d'octets à reconnaître en tant que dite unité, ladite donnée d'activation d'octet (BE1) comportant ladite première représentation boutiste, et
dans lequel ledit premier commutateur (1a) sort ladite donnée d'octet de sortie (DA2) comportant, en tant qu'une unité, le nombre d'octets indiqué par ledit signal de taille de donnée (DS) lorsque ledit signal de commutateur boutiste (ES) indique ladite exécution, et
dans lequel un ensemble desdites positions d'octet indiquées par lesdites données d'activation d'octet (BE1) est maintenu dans ladite donnée d'octet de sortie (DA2).

2. Appareil de conversion boutiste selon la revendication 1, comprenant en outre :
un second commutateur (1b) entrant ledit signal de taille de donnée (DS), ledit signal de commutateur boutiste (ES), et ladite donnée d'activation d'octet (BE1) pour sortir une donnée d'activation d'octet de sortie (BE2) comportant ladite seconde représentation boutiste, et
dans lequel ledit second commutateur (1b) sort ladite donnée d'activation d'octet de sortie (BE2) comportant le nombre de bits correspondant au nombre d'octets indiqué par ledit signal de taille de donnée (DS) lorsque ledit signal de commutateur boutiste (ES) indique ladite exécution, et
dans lequel un ensemble de bits correspondant auxdites positions d'octet indiquées par lesdites données d'activation d'octet (BE1) est maintenu dans ladite donnée d'activation d'octet de sortie (BE2).

3. Appareil de conversion boutiste selon la revendication 1 ou 2, dans lequel lorsque la première représentation boutiste est une représentation gros-boutiste, ladite seconde représentation boutiste est une représentation petit-boutiste, et
dans lequel lorsque la première représentation boutiste est ladite représentation petit-boutiste, ladite seconde représentation boutiste est ladite représentation gros-boutiste.

4. Appareil de conversion boutiste selon l'une quelconque des revendications 1 à 3, dans lequel ladite donnée d'octet d'entrée (DA1) est une donnée de quatre octets et le nombre d'octets indiqué par ledit signal de taille de donnée (DS) est un de un octet, de deux octets, de trois octets et de quatre octets.

5. Appareil de conversion boutiste selon la revendication 4, dans lequel lorsque le nombre d'octets est un octet, ladite position d'octet à reconnaître correspond à une des quatre positions d'octet de ladite donnée d'octet d'entrée (DA1).

6. Appareil de conversion boutiste selon la revendication 4, dans lequel lorsque le nombre d'octets est deux octets, ladite position d'octet à reconnaître correspond aux deux octets inférieurs ou aux deux octets supérieurs des quatre positions d'octet de ladite donnée d'octet d'entrée (DA1).

7. Appareil de conversion boutiste selon la revendication 4, dans lequel lorsque le nombre d'octets est trois octets, ladite position d'octet à reconnaître correspond aux trois octets inférieurs ou aux trois octets supérieurs des quatre positions d'octet de ladite donnée d'octet d'entrée (DA1).

8. Appareil de conversion boutiste selon la revendication 4, dans lequel lorsque le nombre d'octets est quatre octets, ladite position d'octet à reconnaître correspond à tous les octets des quatre positions d'octet de ladite donnée d'octet d'entrée (DA1).

9. Modem ADSL comportant un appareil de conversion boutiste selon la revendication 1.

10. Dispositif d'adaptation de ligne comportant un appareil de conversion boutiste selon la revendication 1.
